# EUROPÄISCHE PATENTANMELDUNG

(11) **EP 2 426 390 A2**
(43) Veröffentlichungstag der Anmeldung: **07.03.2012**
(21) Anmeldenummer: 11006313.8
(22) Anmeldetag: 28.07.2011
(51) Int. Cl.: F16L 21/03

(54) **Rohrendsteckmuffendichtungsanordnung**

(30) Priorität: 03.09.2010 DE 102010044290
(71) Anmelder: Poloplast GmbH & Co. KG, 4060 Leonding (AT)
(72) Erfinder: Felber, Simone, Dipl. -Ing., 4863 Seewalchen am Attersee (AT); Mayrbäurl, Erwin, Dipl. -Ing., 4481 Asten (AT); Miethlinger, Jürgen, Dr., 4851 Gampern (AT)
(74) Vertreter: Weber, Joachim

(57) **Zusammenfassung**

Die Erfindung bezieht sich auf eine Rohrendsteckmuffendichtungsanordnung, welche in eine ringförmige Sicke 1 einer Rohrendsteckmuffe 2 einlegbar ist, wobei die Dichtungsanordnung eine im Wesentlichen radial nach Innen, bezogen auf eine Mittelachse der Dichtungsanordnung weisende Dichtlippe 15 sowie eine im Wesentlichen in Axialrichtung weisende Dichtlippe 5 umfasst.

## Beschreibung

### Beschreibung

Die Erfindung bezieht sich auf eine Rohrensteckmuffendichtungsanordnung mit einer Rohrmuffe, welche an einem Rohrende ausgebildet ist und mit einer Dichtungsanordnung versehen ist. In die Steckmuffe kann dann ein weiteres Rohr passend und durch die Dichtungsanordnung abgedichtet eingesteckt werden.

Die Erfindung bezieht sich somit auf ein Versteifungselement mit einer Dichtlippe, wie es zusätzlich zu einer Dichtung, oder mit einer Dichtung verbunden, in einer Rohrendsteckmuffe aus einem thermoplastischen Material verwendet werden kann.

Ein Nachteil bestehender, aus einer Sicke einer Rohrendsteckmuffe entnehmbarer Dichtungen ist, dass Verschmutzungen, insbesondere gröbere Verschmutzungen wie Steine, Sand oder Erdreich in den Bereich der Sicke eindringen und unter die Dichtung gelangen können. Dies kann bei der Lagerung, dem Transport, oder beim Zusammenbau erfolgen.

Durch Verschmutzung, insbesondere gröbere, körnige Verunreinigungen, die unter der Dichtung, oder im Bereich der Dichtung verbleiben, wird die Dichtwirkung der Dichtung negativ beeinträchtigt und/oder die Dichtung beschädigt.

Weiterhin kann es beim Zusammenbau, insbesondere bei sich ergebenden Winkelabweichungen durch nicht gerades Zusammenführen von Rohren zu einem Ausweichen der Dichtung kommen und schließlich dazu führen, dass die Dichtung aus der Sicke zumindest teilweise austritt und die Verbindung undicht wird.

Aus der DE 20 2004 016 334 U1 ist eine Konstruktion bekannt, bei welcher ein zusätzlicher Stützring in die Sicke der Rohrmuffe eingelegt ist, um die Dichtung abzustützen und in Position zu halten. Hierbei ist es insbesondere nachteilig, dass beim Einschieben eines Rohrs Verschmutzungen neben dem Stützring in die Sicke gelangen können, und somit die Dichtwirkung herabsetzen oder ein ungewolltes Verschieben der Dichtung bewirken. Eine ähnliche Konstruktion zeigt die DE 20 2004 000 964 U 1.

Aus der EP 1 417 088 B1 ist es bekannt, neben dem Dichtungsring einen separaten Stützring einzulegen, welcher zusätzlich mit einem Abstreiferring versehen ist. Auch hierbei besteht die Gefahr, dass beim Einschieben eines Rohrs Verunreinigungen neben oder hinter die Dichtungsanordnung eingebracht werden.

Der Erfindung liegt die Aufgabe zugrunde, ein Verstärkungselement zu schaffen, welches einen sicheren Halt der Dichtung speziell zum Rohrende hin gewährleistet und gleichzeitig zuverlässig verhindert, dass Verschmutzungen in den Bereich der Sicke unter die Dichtung eindringen und zu Undichtigkeiten führen können. Ebenso soll ein nachträgliches Herausnehmen, Einlegen bzw. Auswechseln der Dichtung und/oder des Verstärkungselements möglich sein.

Erfindungsgemäß wird die Aufgabe jeweils durch die Merkmalskombinationen des Anspruchs 1 gelöst, die Unteransprüche zeigen weitere vorteilhafte Ausgestaltungen der Erfindung.

Erfindungsgemäß ist somit vorgesehen, dass das Verstärkungselement zumindest eine angeformte Dichtlippe besitzt, die am Radius des Übergangs zur Sicke gegen gröbere Verunreinigungen zuverlässig abdichtet. Weiterhin stabilisiert das Verstärkungselement die Dichtung in ihrer Position, was bei entsprechenden Fertigungstoleranzen für die Sicke trotzdem einen optimalen Sitz der Dichtung sicherstellt.

In einer Ausführungsvariante wird die Dichtung neben dem Versteifungsring zusätzlich mit einem Sickenring auf der Seite zur Rohrmitte hin fixiert.

Durch die erfindungsgemäße Ausgestaltung ist insbesondere gewährleistet, dass die Dichtung präzise gehalten werden kann, dass diese herausnehmbar bleibt und dass zuverlässig sichergestellt wird, dass durch die zusätzliche Dichtlippe des Versteifungselements keine Verschmutzungen in die Sicke eindringen und die Dichtung unterwandern können.

Erfindungsgemäß ist somit eine Dichtungsanordnung geschaffen, welche so ausgestaltet ist, dass sie zwei Dichtfunktionen übernimmt, nämlich zum einen eine Abdichtung in radialer Richtung, durch welche das Rohrende, welches in die Einsteckmuffe eingeschoben wird, abgedichtet wird und zum anderen eine Abdichtung in im Wesentlichen axialer Richtung, um die Dichtungsanordnung und den Sicken-Innenraum gegen das Eintreten von Schmutz, Partikeln oder Ähnlichem, abzudichten. Es liegt erfindungsgemäß somit eine Doppel-Funktion vor, welche zu einer zuverlässigen und wirksamen Gesamtabdeckung führt und ein hohes Maß an Gebrauchssicherheit gewährleistet.

Durch die erfindungsgemäße Ausgestaltung und durch die als besondere Ausbildung der Erfindung vorgesehene Unterteilung in eine ringförmige Dichtung und ein separates Versteifungselement ist es möglich, diese Bauelemente aus den jeweils geeigneten Materialien herzustellen. Weiterhin ist es möglich, die gesamte Dichtungsanordnung aus der Sicke der Rohrendmuffe zu entnehmen und auszutauschen, sofern dies erforderlich ist.

Die erfindungsgemäße Dichtungsanordnung weist somit eine im Wesentlichen radial zur Mittelachse des Rohres bzw. der Rohrmuffe weisende Dichtungslippe sowie eine im Wesentlichen axiale Dichtlippe auf.

Bevorzugterweise weist die Dichtlippe im montierten Zustand zu einem Einsteckende der Rohrendsteckmuffe hin. Hierdurch wird in jedem Fall verhindert, dass beim Einschieben eines Spitzendes eines Rohrs Verunreinigungen, Schmutzpartikel oder Ähnliches in den Bereich der Dichtungsanordnung, insbesondere neben oder hinter die Dichtungsanordnung in die Sicke der Rohrmuffe eingeschoben werden.

Erfindungsgemäß kann die Dichtlippe aus demselben Material wie das Versteifungselement oder aus einem unterschiedlichen Material gefertigt sein. Dabei kann es günstig sein, wenn das Versteifungselement aus einem Material mit größerer Härte als das Material der Dichtung hergestellt ist. Durch die größere Härte des Versteifungselements führt dieses zu einer zusätzlichen Stabilisierung und Halterung der weicheren Dichtung.

Weiterhin kann es günstig sein, wenn das Versteifungselement mittels einer Steckverbindung lösbar mit der Dichtung verbunden ist. Hierdurch können die beiden Bauteile separat gefertigt und montiert werden. Weiterhin ist es möglich, diese gegebenenfalls einzeln auszutauschen.

Zur Stabilisierung der Dichtungsanordnung kann es vorteilhaft sein, wenn zusätzlich ein Sickenring in die Sicke eingelegt wird, welcher an der dem Versteifungselement gegenüberliegenden Seite der Dichtung angeordnet ist.

Im Folgenden wird die Erfindung anhand eines Ausführungsbeispiels in Verbindung mit der Zeichnung beschrieben. Dabei zeigt:
- Fig. 1: eine schematische Teil-Schnittansicht einer erfindungsgemäßen Rohrmuffe mit erfindungsgemäßer Dichtungsanordnung,
- Fig. 2: eine vergrößerte Teilansicht eines abgewandelten Ausführungsbeispiels des Versteifungselements, und
- Fig. 3, 4: abgewandelte Ausführungsbeispiele des Sickenrings.

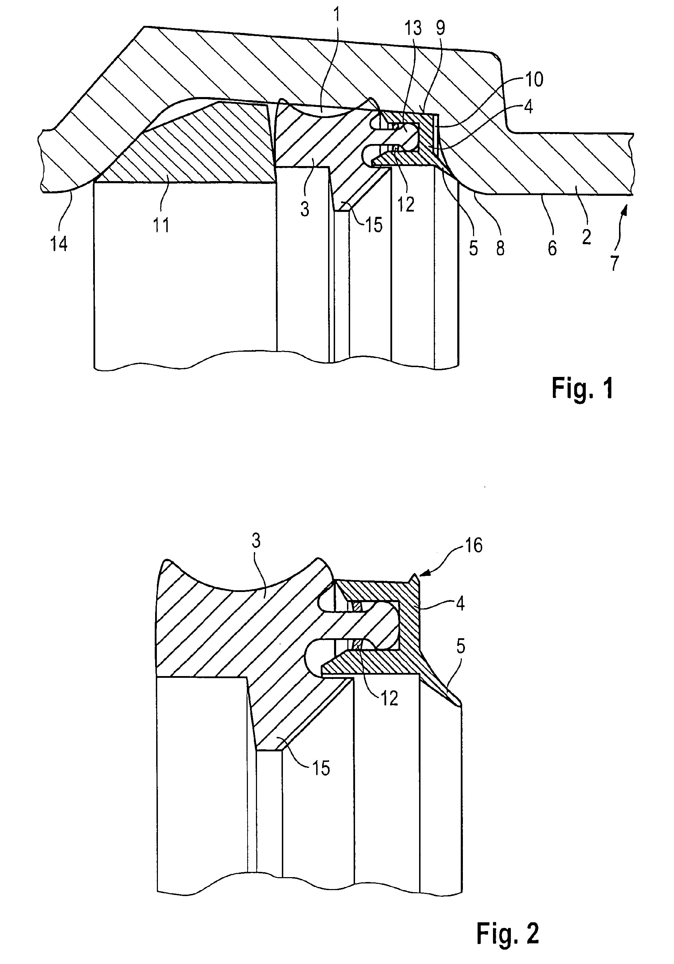

Die Fig. 1 zeigt eine beispielhafte Ausgestaltung des Versteifungselements 4 mit der Dichtlippe 5.

Die Dichtung 3 ist in Fig. 1 zur besseren Darstellbarkeit in unverpresstem Zustand gezeichnet.

Durch die erfindungsgemäße Ausgestaltung des Versteifungselements 4 mit einer Dichtlippe 5 ergibt sich eine umlaufende Dichtkante oder Dichtlippe im Bereich eines ersten Radius 8 der Wandung 6 der Sicke 1 zum Einsteckende 7 hin. Mit dieser Dichtlippe 5 wird verhindert, dass gröbere Verschmutzungen in die Sicke 1 eindringen können und somit die Dichtwirkung negativ beeinträchtigt wird.

Die Dichtlippe 5 am Versteifungselement 4 ist vorzugsweise als Dichtnase ausgebildet, welche bei der Montage am Radius 8 der Sicke 1 am Einsteckende 7 verformt wird und durch die Federwirkung des Materials eine umlaufende Dichtfläche erzeugt. Diese Dichtfläche schützt somit die Sicke 1 vor Verunreinigungen.

Die Federwirkung ergibt sich durch die Verformung des Materials des Versteifungselements 4, da das Versteifungselement 4 versucht, sich in seine Ausgangsposition zurück zu bewegen. Um eine optimale Federwirkung zu erzielen und die Spannungen im Versteifungselement 4 und in der Dichtlippe 5 möglichst gering zu halten, empfiehlt es sich, als Länge der Dichtlippe 5 mindestens die doppelte Abmessung zur Dicke im Übergang von Dichtlippe 5 zum Versteifungselement 4 zu wählen.

Die Dichtlippe 5 ist vorzugsweise mit dem Versteifungselement 4 aus dem gleichen Material einstückig ausgebildet, kann aber auch mittels 2K-Technik aus zwei unterschiedlichen Kunststoffen, z.B. zwei Thermoplasten oder einem Thermoplast mit einem Elastomer bzw. TPE, gefertigt werden, oder formschlüssig am Versteifungselement 4 eingeschnappt bzw. stoffschlüssig aufgeklebt oder aufgeschweißt sein.

Neben der zusätzlichen Dichtlippe bringt das Versteifungselement 4 eine zusätzliche Abstützung und Fixierung der Dichtung 3 im Bereich zum Einsteckende 7. Durch das Versteifungselement 4 kann ein Verdrücken oder Rausquetschen der Dichtung 3 zum Einsteckende 7 hin sicher verhindert werden.

Die Abstützung der Dichtung 3 kann durch einen bekannten Sickenring 11 Fig. verbessert werden. In diesem Fall ist die Dichtung 3 vollständig in Ihrer Position fixiert, bleibt aber demontierbar.

Das Versteifungselement 4 wird in eingebautem Zustand an die Außenwand der Sicke 1 gedrückt und kann an dieser durch die Freistellung 10 zum Einsteckende 7 hin gleiten und damit Bewegungen und Fertigungstoleranzen aufnehmen. Durch den Kraftfluss zwischen dem Sickenring 11, der Dichtung 3, und dem Versteifungselement 4, wird die Dichtung 3 an die Auflagefläche 9 gepresst und die Dichtlippe 5 des Versteifungselements 4 zum Rohr gedrückt. Der Verlauf der Wandung der Sicke 1 kann parallel zur Rohrachse, oder auch, wie in Fig. 1 dargestellt, mit einem entsprechenden Winkel zwischen 0 und 15° schräg verlaufen.

Sowohl das Versteifungselement 4, als auch die Dichtung 3, bleiben durch die erfindungsgemäße Ausgestaltung und bei entsprechender Materialwahl austauschbar und demontierbar. Dadurch kann bei einer beschädigten Dichtung 3 diese ausgetauscht werden, ohne das gesamte Rohr (Rohrendsteckmuffe 2) tauschen zu müssen.

Da das Versteifungselement 4 auch die Dichtung 3 in ihrer radialen Position stabilisiert, ist dieses bevorzugt aus einem Material mit höherer Härte wie die Dichtung 3 gefertigt. Trotz höherer Härte kann durch die Geometrie des Versteifungselements 4 genug Dichtwirkung, speziell gegenüber gröberen Verunreinigungen, erzielt werden. Die radiale Positionierung der Dichtung 3 unterstützt eine Verpressung der Dichtungsaußenfläche in der Sicke 1 und verhindert so das Hinterwandern des Dichtrückens der Dichtung 3 durch feinste Schmutzpartikel.

Das Verstärkungselement 4 besteht vorzugsweise aus Kunststoff, hier aus der Materialklasse der Thermoplaste. Es kann aber auch ein Elastomer mit relativ hoher Härte gewählt werden. Dabei ist die Härte entsprechend so zu wählen, dass die Stabilisierungsfunktion des Verstärkungselements 4 erhalten bleibt. In günstiger Weiterbildung ist das Verstärkungselement 4 zusätzlich durch einen eingezogenen, geschlitzten Metallring verstärkt.

Die in der Fig. 1 als formschlüssige Verbindung dargestellte Verbindung zwischen der Dichtung 3 und dem Versteifungselement 4 kann ebenso reibschlüssig oder stoffschlüssig erfolgen.

Bei einer formschlüssigen Verbindung kann die Dichtung 3 entweder bei der Montage in der Sicke 1 oder auch vorher mit dem Versteifungselement 4 verbunden werden. Eine formschlüssige Verbindung wird vorzugsweise durch entsprechende Halteelemente 12 mit einer entsprechend korrespondierenden Haltefläche 13 an der Dichtung 3 realisiert. Hierbei kann die Dichtung 3 entweder lösbar, oder auch unlösbar mit dem Versteifungsring (40) verschnappt werden. Die dargestellten Halteelemente 12 sind entweder umlaufend oder auch nur partiell angeordnet.

Bei einer stoffschlüssigen Verbindung kann beispielsweise die Fertigung bereits mittels 2K-Technik erfolgen, sodass beide Materialien (die Dichtung 3 und das Versteifungselement 4) bereits in einer Spritzgießmaschine verbunden werden. Hierbei können sowohl beide Teile 3, 4 aus Elastomer, aus Thermoplast, aus TPE, oder auch die Dichtung 3 aus Elastomer oder aus TPE und das Versteifungselement 4 aus Thermoplast bestehen. Derartige Kombinationen und auch die entsprechende Verfahrenstechnik zur Herstellung sind grundsätzlich bekannt und werden hier nicht weiter beschrieben.

Es ist selbstverständlich auch möglich, dass die stoffschlüssige Verbindung zwischen der Dichtung 3 und dem Versteifungsring 4 durch Verschweißen mit geeigneten Schweißverfahren, wie sie für Kunststoffe bekannt sind, oder Verkleben der beiden Teile erfolgt.

Weiterhin besteht die Möglichkeit, dass die Dichtung 3 mit dem Versteifungselement 4 inklusive der Dichtlippe 4 beim Montieren mit dem bereits in der Sicke 1 sitzenden Sickenring 11 formschlüssig verbunden wird. Dazu könnte der Sickenring 11 vorzugsweise mit entsprechenden Halteelementen und die Dichtung 3 mit einer entsprechend korrespondierenden Haltefläche an der Dichtung 3 an der Seite zum Sickenring 11 ausgebildet werden. Hierbei wird die Dichtung 3 lösbar mit dem Sickenring 11 verschnappt werden.

Die Fig. 2 zeigt ein abgewandeltes Ausführungsbeispiel des Versteifungselements/ Verstärkungselements 4. Dieses weist einen ringförmigen, radial spitz zu einer Umfangslinie verlaufenden Ansatz 16 auf, welcher zur Zentrierung und zum Abdichten dient.

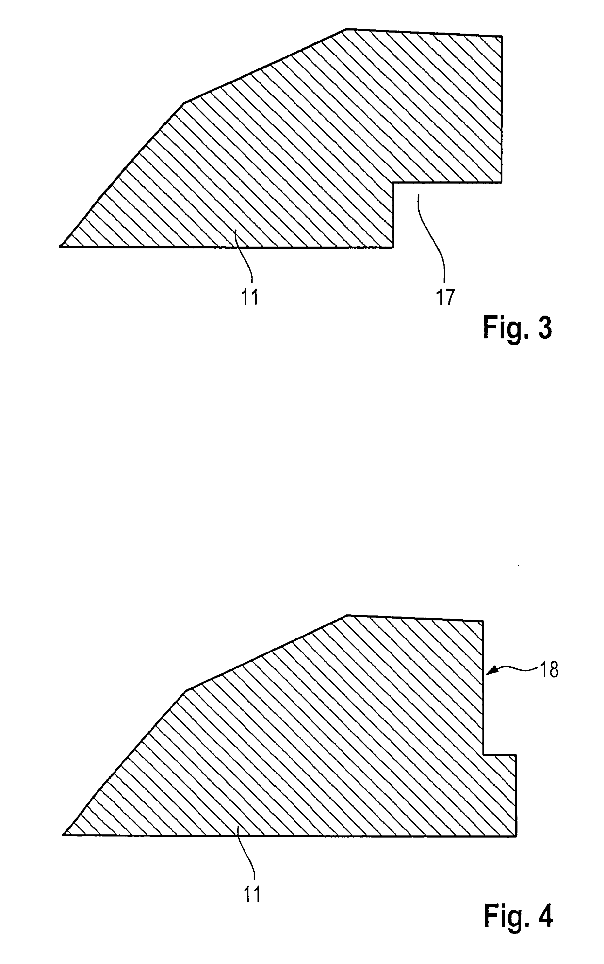

Die Fig. 3 und 4 zeigen Ausgestaltungsvarianten des Sickenrings 11. Dieser weist, wie in Fig. 3 gezeigt, eine ringförmige, radial nach innen weisende Freistellung 17 auf. Bei dem in Fig. 4 gezeigten Ausführungsbeispiel ist eine radial nach außen und zur Seite weisende Schulterkante 18 vorgesehen. Durch diese Ausgestaltungsvarianten ist es möglich, die Dichtung 3 zusätzlich zu fixieren, beispielsweise mittels einer Steckverbindung oder einer Schnappverbindung. Insbesondere bei dem Ausführungsbeispiel der Fig. 4 ergibt sich eine zusätzliche radiale Fixierung.

Bei den erfindungsgemäß vorgesehenen Varianten des Sickenrings 11 ist sichergestellt, dass die Dichtlippe 15 an einem Rohr (nicht dargestellt) dichtet und nicht in einen Spalt zwischen der Dichtung 3 und dem Sickenring 11 gedrückt wird, wodurch die Dichtwirkung vermindert werden würde.

### Bezugszeichenliste

- 1: Sicke
- 2: Rohrendsteckmuffe
- 3: ringförmige Dichtung
- 4: Versteifungselement / Verstärkungselement
- 5: Dichtlippe
- 6: Wandung der Sicke
- 7: Einsteckende
- 8: erster Radius
- 9: Auflagefläche
- 10: Freistellung
- 11: Sickenring
- 12: Halteelement
- 13: Haltefläche
- 14: zweiter Radius
- 15: Dichtungslippe
- 16: Ansatz
- 17: Freistellung
- 18: Schulterkante

## Patentansprüche

1. Rohrendsteckmuffendichtungsanordnung, welche in eine ringförmige Sicke (1) einer Rohrendsteckmuffe (2) einlegbar ist, wobei die Anordnung eine im Wesentlichen ringförmige Dichtung (3) umfasst, sowie ein Versteifungselement (4), welches einen ringförmigen Grundkörper sowie zumindest eine zumindest zum Teil axial zu einer Mittellinie der Rohrendsteckmuffendichtungsanordnung ausgerichtete Dichtlippe (5) umfasst, wobei die Dichtlippe (5) im montierten Zustand der Dichtungsanordnung dichtend gegen eine Wandung (6) der Sicke (1) anlegbar ist.

2. Anordnung nach Anspruch 1, **dadurch gekennzeichnet, dass** die Dichtlippe (5) im montierten Zustand zu einem Einsteckende der Rohrendsteckmuffe (2) weisend ausgebildet ist.

3. Anordnung nach Anspruch 1 oder 2, **dadurch gekennzeichnet, dass** die Dichtlippe (5) aus demselben Material wie das Versteifungselement (4) oder aus einem unterschiedlichen Material gefertigt ist.

4. Anordnung nach einem der Ansprüche 1 bis 3, **dadurch gekennzeichnet, dass** das Versteifungselement (4) lösbar mit der Dichtung (3) verbunden ist.

5. Anordnung nach Anspruch 4, **dadurch gekennzeichnet, dass** das Versteifungselement (4) mittels einer Steckverbindung (12, 13) oder einer Schnappverbindung lösbar mit der Dichtung (3) verbunden ist.

6. Anordnung nach einem der Ansprüche 1 bis 5, **dadurch gekennzeichnet**, das das Versteifungselement (4) aus einem Material mit größerer Härte und höherem E-Modul als das Material der Dichtung (3) gefertigt ist.

7. Anordnung nach einem der Ansprüche 1 bis 6, **dadurch gekennzeichnet, dass** an der dem Versteifungselement (4) axial gegenüberliegenden Seite der Dichtung (3) ein Sickenring (11) angeordnet ist.

8. Anordnung nach einem der Ansprüche 1 bis 7, **dadurch gekennzeichnet, dass** die ringförmige Dichtlippe (5) aus ihrer im Wesentlichen axialen Ausrichtung bei der Montage elastisch radial nach Innen, bezogen auf eine Mittelachse der Dichtungsanordnung, verformbar ist.

9. Anordnung nach einem der Ansprüche 1 bis 8, **dadurch gekennzeichnet, dass** der Sickenring (11) mit zumindest einer Ausnehmung (17, 18) zur Fixierung der Dichtung (3), insbesondere mittels einer Steckverbindung oder einer Schnappverbindung, versehen ist.

10. Anordnung nach einem der Ansprüche 1 bis 9, **dadurch gekennzeichnet, dass** das Versteifungselement (4) mit zumindest einem radial nach außen weisenden ringförmigen Ansatz (16) versehen ist.

11. Rohrendsteckmuffendichtungsanordnung, welche in eine ringförmige Sicke (1) einer Rohrendsteckmuffe (2) einlegbar ist, wobei die Dichtungsanordnung eine im Wesentlichen radial nach Innen, bezogen auf eine Mittelachse der Dichtungsanordnung weisende Dichtlippe (15) sowie eine im Wesentlichen in Axialrichtung weisende Dichtlippe (5) umfasst.

12. Anordnung nach Anspruch 11, **dadurch gekennzeichnet, dass** die Dichtlippe (15) aus einem weicheren Werkstoff als die Dichtlippe (5) besteht.
